# EUROPEAN PATENT APPLICATION

(11) **EP 4 746 049 A1**
(43) Date of publication of application: **20.05.2026**
(21) Application number: 25188652.9
(22) Date of filing: 10.07.2025
(51) Int. Cl.: H01M 4/04, H01M 10/04

(54) **SECONDARY BATTERY MANUFACTURING APPARATUS AND METHOD**

(30) Priority: 18.11.2024 KR 20240164614
(71) Applicant: SAMSUNG SDI CO., LTD., Yongin-si, Gyeonggi-do 17084 (KR)
(72) Inventor: LEE, Gahyeon, 17084 Yongin-si, Gyeonggi-do (KR); KIM, Gisung, 17084 Yongin-si, Gyeonggi-do (KR); PARK, Jaeseong, 17084 Yongin-si, Gyeonggi-do (KR); SEO, Wonsub, 17084 Yongin-si, Gyeonggi-do (KR); OH, Geunyeong, 17084 Yongin-si, Gyeonggi-do (KR)
(74) Representative: Gulde & Partner

(57) **Abstract**

A secondary battery manufacturing apparatus (60) including: a drying chamber (61) configured to receive an electrode plate (55) on which a plurality of electrode material coating layers (55b) are formed in parallel with an uncoated portion (55c) interposed therebetween passing therethrough; and a heating lamp unit (70) for drying an electrode plate (55). The heating lamp unit (70) includes: heating lamps (71) respectively corresponding to the electrode material coating layer (55b) in each lane in the drying chamber (61) and configured to heat the electrode material coating layers (55b) excluding the uncoated portion (55c); and a lamp driver (72) configured to drive each of the heating lamps (71).

## Description

### BACKGROUND

### 1. Field

The present disclosure relates to the manufacture of secondary batteries using a heating lamp unit for drying an electrode plate in a manufacturing apparatus for a secondary battery.

### 2. Description of the Related Art

Different from primary batteries that are not designed to be (re)charged, secondary batteries are designed to be recharged. Typically, a secondary battery includes an electrode assembly including (or formed of) positive/negative electrode plates and a separator. The positive/negative electrode plates may be manufactured through various processes, such as rolling, drying, slitting, and notching, after a process of coating a substrate with an active material. An electrode assembly is manufactured by interposing a separator between the positive/negative electrode plates and using a winding method or a stacking method.

A process of manufacturing a secondary battery may include a coating process of coating one or both sides of an electrode substrate with an active material mixture and a roll pressing process of compressing and stretching an electrode plate coated with the mixture through the coating process by using a roller to make the electrode plate thin and flat, thereby improving energy density and enabling the smooth movement of lithium ions to increase the output and performance of the secondary battery.

A drying unit may be used to dry the electrode plate that has undergone the coating process and/or rolling process. In a conventional drying unit, radiant energy is transmitted from a near-infrared (NIR) lamp to an electrode plate. However, the conventional drying device using the NIR lamp has a structure in which multi-row coated electrode materials are heated by a single heating lamp, and therefore, heat is unnecessarily transferred to an uncoated portion, that is, an uncoated portion area, and furthermore, the drying quality of each row cannot be adequately controlled.

The above information disclosed in this Background section is for enhancement of understanding of the background of the present disclosure, and therefore, it may contain information that does not constitute a related (or prior) art.

### SUMMARY

Aspects of the present disclosure are directed to a secondary battery manufacturing apparatus and method that supplies heat only to a mixture coating area through heating and control of each lane of the electrode material, thereby improving drying quality and productivity, and a heating lamp unit for drying an electrode plate in the manufacturing apparatus.

According to an aspect of the present disclosure, a secondary battery manufacturing apparatus includes a drying chamber configured to receive an electrode plate on which a plurality of electrode material coating layers are formed. The electrode material coating layers are formed in parallel with an uncoated portion. The uncoated portion is interposed therebetween, i.e. between the electrode material coating layers. The uncoated portion may pass therethrough, i.e. through the electrode material coating layers. The secondary battery manufacturing apparatus includes a heating lamp unit for drying an electrode plate. The heating lamp unit includes heating lamps. The heating lamps respectively correspond to the electrode material coating layer of each lane in the drying chamber. The heating lamps respectively are configured to heat the electrode material coating layers excluding the uncoated portion. The secondary battery manufacturing apparatus includes a lamp driver configured to drive each of the heating lamps.

According to another aspect of the present disclosure, a secondary battery manufacturing method includes transferring an electrode plate on which a plurality of electrode material coating layers are formed in parallel with an uncoated portion interposed therebetween, and passing the electrode plate through a drying chamber. The electrode material coating layer is dried by using a heating lamp inside the drying chamber and by applying heat to only the electrode material coating layer excluding the uncoated portion. The drying chamber may be the drying chamber of the secondary battery manufacturing apparatus according to the previous aspect.

Hence, by only or exclusively heating the electrode material coating layers, energy can be saved and/or potential overheating of the uncoated portion can be avoided.

The following embodiments can be combined as desired.

According to an embodiment of the secondary battery manufacturing apparatus, the heating lamp may be a linear lamp. The heating lamp may be arranged horizontally and perpendicular to a longitudinal direction of the electrode material coating layer or of the electrode plate or of the lane or the lanes. The uncoated portion may extend along the longitudinal direction. The secondary battery manufacturing apparatus may be configured to transport the electrode plate through the drying chamber along the longitudinal direction. The heating lamp may be arranged parallel to the electrode plate. An advantage of this embodiment may be that a dimension and e.g. length of the heating lamp can be short, reducing size required for the heating lamp.

According to an embodiment of the secondary battery manufacturing apparatus, the heating lamp may be arranged at an angle with respect to a longitudinal direction of the electrode material coating layer. The alignment of the heating lamp at the angle may differ from the alignment of the heating lamp perpendicular to a longitudinal direction. For example, the angle may be less than 90 ° and/or above 0 ° and/or at least 10 °, at least 20 ° at least 30 ° at least 40 ° at least 45 ° at least 50 ° at least 60 ° at least 70 ° or at least 80 °. An advantage of this embodiment may be that the energy required in the heating lamp to heat the coating layer may be less as the heating lamp can be longer, which may reduce the cost of the heating lamp.

According to an embodiment of the secondary battery manufacturing apparatus, the heating lamp unit for drying an electrode plate may be or may be arranged above and below a transfer path of the electrode plate. One of the heating lamps of the heating lamp unit may be arranged above the transfer path. Another one of the heating lamps of the heating lamp unit may be arranged below the transfer path. An advantage of this embodiment may be that the coating layer can be heated simultaneously from two opposite sides, reducing undesired heat gradients and/or speeding up the drying.

According to an embodiment of the secondary battery manufacturing apparatus, the heating lamp unit for drying an electrode plate may further comprise a support structure configured to support the heating lamp while mounted in the drying chamber. An advantage of this embodiment may be that the heating lamp unit can be arranged and/or maintained independent of other components of the apparatus.

According to an embodiment of the secondary battery manufacturing apparatus, the heating lamp may be a lamp in which both end portions in a longitudinal direction are bent. The end portions may be bent away from the lane or one of the lanes of the closest one of the lanes in the drying chamber. An advantage of this embodiment may be that the end portions, which may irradiate an amount of light different than other portions of parts of the heating lamp are hindered from heating the coating layer.

According to an embodiment of the secondary battery manufacturing apparatus, the heating lamp may have a central heat radiating part. The central heat radiating part may extend in a straight line. The heating lamp may have bent end portions. The bent end portions may be bent at both end portions of the central heat radiating part. The heating lamp may have a connector at each bent end portion. The connectors may be connected to the lamp driver. An advantage of this embodiment may be that the connectors do not affect the heating by irradiation of the coating layer.

According to an embodiment of the secondary battery manufacturing apparatus, the heating lamp may be configured and e.g. aligned to radiate light in or towards a light radiation area that matches a width of the electrode material coating layer or of the lane. The width may be perpendicular to the longitudinal direction. The lamp may extend along the width or under an angle to the width. The angle may be higher than 0 ° and/or less than 90 °, less than 80 °, less than 70 °, less than 60 °, less than 50 °, less than 45 °, less than 40 °, less than 30 °, less than 20 °, or less than 10 °.

According to an embodiment of the method, the heating lamp may correspond to the electrode material coating layer of each lane.

According to an embodiment of the method, in the drying of the electrode material coating layer, the heating lamp may radiate light in or towards a light radiation area that matches a width of the electrode material coating layer.

According to another embodiment of the present disclosure, a heating lamp unit for drying an electrode plate includes a plurality of heating lamps respectively corresponding to an electrode material coating layer of each lane of an electrode plate on which a plurality of electrode material coating layers are formed in parallel with an uncoated portion interposed therebetween and configured to heat the electrode material coating layers excluding the uncoated portion, a lamp driver configured to drive the heating lamps, and a support structure configured to support the heating lamps.

The heating lamp may be a linear lamp. The heating lamp may be horizontally arranged perpendicular to a longitudinal direction of the electrode material coating layer.

The heating lamp may be a linear lamp. The heating lamp may be arranged horizontally at an angle with respect to a longitudinal direction of the electrode material coating layer.

One of the heating lamps may be arranged above and another one of the heating lamps may be arranged below a transfer path of the electrode plate.

The heating lamp may be a lamp having both end portions in a longitudinal direction that are bent.

The heating lamp may comprise a central heat radiating part extending in a straight line. The heating lamp may comprise bent end portions at both end portions of the central heat radiating part. The bent end portions may be bent and/or extend along a line that differs from the straight line. The heating lamp may comprise a connector at each bent end portion. The connectors may be connected to the lamp driver.

The lamp driver may be configured to drive each of the heating lamps independent of at least one other of the heating lamps. At least selected or all of the heating lamps may respectively correspond in size and/or position to a different one of the electrode material coating layers. The secondary battery manufacturing apparatus may be configured to arrange the electrode plate such that each of the electrode material coating layers are arranged in one of a plurality of lanes. The position and/or size of each the lanes may correspond the position and/or size of one of the heating lamps. The transfer path may extend in the longitudinal direction. The secondary battery manufacturing apparatus may be configured to transport the electrode plate through the transfer path along the longitudinal direction.

Manufacturing of the electrode plate may be facilitated by drying coating layers on the electrode plate using heating lamps. One of the heating lamps may exclusively irradiate one of the coating layers. At least one other of the heating lamps may exclusively irradiate another one of the coating layer.

Aspects and features of the present disclosure are not limited to those described above, and other aspects and features not specifically mentioned herein will be clearly understood by those skilled in the art from the description of the present disclosure below.

### BRIEF DESCRIPTION OF THE DRAWINGS

The following schematic drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1 illustrates an electrode assembly including an electrode plate manufactured by a manufacturing apparatus according to an embodiment of the present disclosure;
FIG. 2 is a schematic diagram illustrating a configuration of a secondary battery manufacturing apparatus according to an embodiment of the present disclosure;
FIG. 3 is a plan view illustrating an arrangement structure of heating lamps in a heating lamp unit for drying an electrode plate in the secondary battery manufacturing apparatus according to an embodiment of the present disclosure;
FIG. 4 is a schematic diagram illustrating a state in which each electrode material is heated by using the heating lamps shown in FIG. 3;
FIGS. 5 and 6 are plan views illustrating different arrangement structures of the heating lamps in the secondary battery manufacturing apparatus according to embodiments of the present disclosure;
FIGS. 7 and 8 are schematic diagrams illustrating a configuration and an operating method of the heating lamp unit for drying an electrode plate according to an embodiment of the present disclosure;
FIGS. 9 to 11 are schematic diagrams illustrating the heating lamp unit for drying an electrode plate according to other embodiments of the present disclosure;
FIG. 12 is a flowchart describing a secondary battery manufacturing method according to an embodiment of the present disclosure;
FIG. 13 is a diagram schematically illustrating a pouch-type secondary battery to which an electrode assembly manufactured with an electrode plate dried by the manufacturing apparatus according to an embodiment of the present disclosure is applied;
FIG. 14 is a cross-sectional view illustrating a cylindrical secondary battery to which an electrode assembly manufactured with an electrode plate dried by the manufacturing apparatus according to an embodiment of the present disclosure is applied; and
FIG. 15 is a cross-sectional view illustrating a prismatic secondary battery to which an electrode assembly manufactured with an electrode plate dried by the manufacturing apparatus according to an embodiment of the present disclosure is applied.

### DETAILED DESCRIPTION

Hereinafter, embodiments of the present disclosure will be described, in detail, with reference to the accompanying drawings. The terms or words used in the present specification and claims should not be narrowly interpreted according to their general or dictionary meanings but should be interpreted as having meanings and concepts that are consistent with the technical idea of the present disclosure on the basis of the principle that an inventor can be his/her own lexicographer to appropriately define concepts of terms to describe his/her disclosure in the best way. The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

In the figures, dimensions of the various elements, layers, etc. may be exaggerated for clarity of illustration. The same reference numerals designate the same elements.

References to two compared elements, features, etc. as being "the same" may mean that they are "substantially the same." Thus, the phrase "substantially the same" may include a case having a deviation that is considered low in the art, for example, a deviation of about 5% or less. In addition, uniformity of a parameter in a predetermined region may imply uniformity from an average perspective.

Although the terms first, second, and the like are used to describe various components, these components are substantially not limited by these terms. These terms are only used for distinguishing one component from another component, and unless otherwise stated, it is of course that a first component may also be a second component.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list.

Throughout the specification, if "A and/or B" is stated, it means A, B or A and B, unless otherwise stated and if "C to D" is stated, it means C or more and D or less, unless otherwise stated.

When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below.

The controller, lamp driver, and/or any other relevant devices or components according to embodiments of the present disclosure described herein may be implemented utilizing any suitable hardware, firmware (e.g., an application-specific integrated circuit), software, and/or a suitable combination of software, firmware, and hardware. For example, the various components of the controller and/or lamp driver may be formed on one integrated circuit (IC) chip or on separate IC chips. Further, the various components of the controller and/or lamp driver may be implemented on a flexible printed circuit film, a tape carrier package (TCP), a printed circuit board (PCB), or formed on a same substrate as the controller and/or lamp driver. Further, the various components of the controller and/or lamp driver may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device or the functionality of a particular computing device may be distributed across one or more other computing devices without departing from the scope of the exemplary embodiments of the present disclosure.

The terminology used herein is for the purpose of describing embodiments of the present disclosure and is not intended to limit the present disclosure.

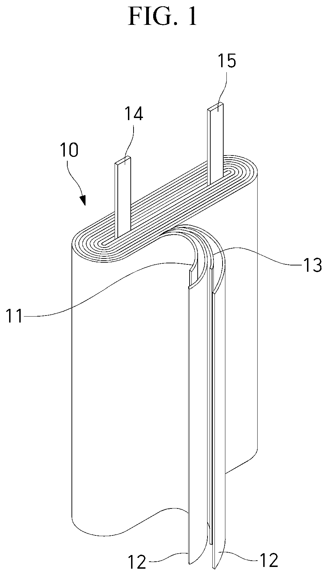

FIG. 1 is an illustration of an electrode assembly 10 including an electrode plate manufactured by a secondary battery manufacturing apparatus according to an embodiment of the present disclosure.

An electrode assembly 10 may be formed by winding or stacking a first electrode plate 11, a separator 12, and a second electrode plate 13, each of which are formed as thin plates or films.

In other embodiments, the electrode assembly 10 may be a stack type rather than a winding type, but the shape of the electrode assembly 10 is not limited in the present disclosure. In addition, the electrode assembly 10 may be a Z-stack electrode assembly in which a positive electrode plate and a negative electrode plate are inserted into both sides (e.g., opposite sides) of a separator, which is then bent (or folded) into a Z-stack.

In addition, one or more electrode assemblies may be stacked (e.g., arranged) such that long sides of the electrode assemblies are adjacent to each other and accommodated in a case, and the number of electrode assemblies in a case is not limited in the present disclosure. The first electrode plate 11 of the electrode assembly 10 may act as a negative electrode, and the second electrode plate 13 may act as a positive electrode. Of course, the reverse is also possible.

The first electrode plate 11 may be formed by applying (e.g., coating or depositing) a first electrode active material, such as graphite or carbon, onto a first electrode substrate formed of a metal foil, such as copper, a copper alloy, nickel, or a nickel alloy. The first electrode plate 11 may include a first electrode tab 14 (e.g., a first uncoated portion), which is a region to which the first electrode active material is not applied. The first electrode tab 14 may be connected to an external first terminal. In some embodiments, when the first electrode plate 11 is manufactured, the first electrode tab 14 may be formed by being cut in advance to protrude to (or protrude from) one side of the electrode assembly 10, or the first electrode tab 14 may protrude to one side of the electrode assembly 10 more than (e.g., farther than or beyond) the separator 12 without being separately cut.

The second electrode plate 13 may be formed by applying (e.g., coating or depositing) a second electrode active material, such as a transition metal oxide, onto a second electrode substrate formed of a metal foil, such as aluminum or an aluminum alloy. The second electrode plate 13 may include a second electrode tab 15 (e.g., a second uncoated portion), which is a region to which the second electrode active material is not applied. The second electrode tab 15 may be connected to an external second terminal. In some embodiments, the second electrode tab 15 may be formed by being cut in advance to protrude to the other side (e.g., the opposite side) of the electrode assembly 10 when the second electrode plate 13 is manufactured, or the second electrode plate 13 may protrude to the other side of the electrode assembly more than (e.g., farther than or beyond) the separator 12 without being separately cut.

The separator 12 prevents a short-circuit between the first electrode plate 11 and the second electrode plate 13 while allowing movement of lithium ions therebetween. The separator 12 may be made of, for example, a polyethylene film, a polypropylene film, a polyethylenepolypropylene film, or the like.

In some embodiments, the electrode assembly 10 may be accommodated in a case along with an electrolyte. In a pouch-type secondary battery, an electrode assembly 10 may be accommodated in a pouch made of flexible material. In a cylindrical or prismatic secondary battery, an electrode assembly 10 may be accommodated in a cylindrical or prismatic metal casing.

A description of materials that can be used for the electrode plate of the above electrode assembly is provided below.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickelmanganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃(0≤f≤2); LiₐFePO₄(0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x ≤ 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particles and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

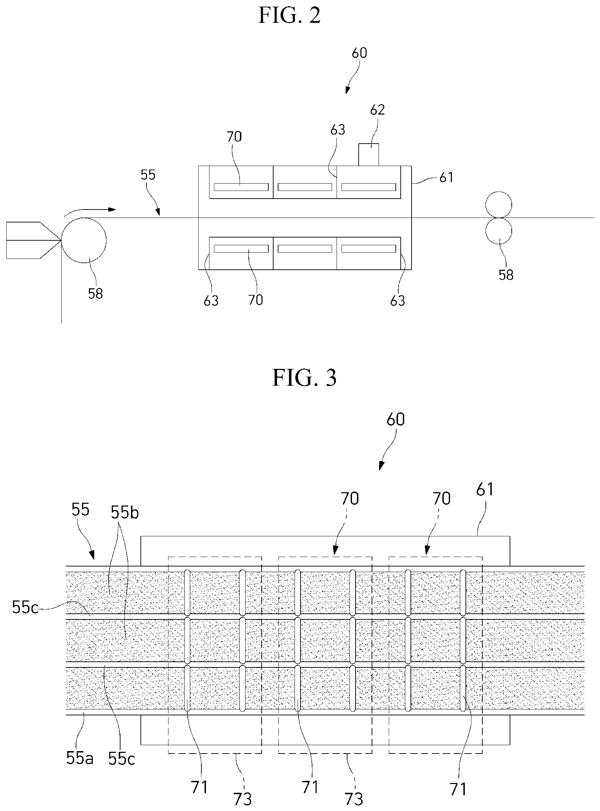

FIG. 2 is a schematic diagram illustrating a secondary battery manufacturing apparatus 60 according to an embodiment of the present disclosure.

Referring to FIG. 2, the secondary battery manufacturing apparatus 60, according to an embodiment of the present embodiment, may include a drying chamber 61, a controller 62, a heating lamp unit 70 for drying an electrode plate, and an air supply duct 63.

The drying chamber 61 may provide a space in which an electrode plate 55 is dried. The electrode plate 55 may be dried by hot air from the heating lamp unit 70 for drying an electrode plate and/or the air supply duct 63 inside the drying chamber 61 while passing through the drying chamber 61.

The controller 62 may control the operation of the heating lamp unit 70 for drying an electrode plate. For example, the controller 62 controls the on/off and heating temperature of the heating lamp 71, described below. In addition, the temperature and wind pressure (or wind speed) of the hot air supplied through the air supply duct 63 may also be controlled. The hot air discharged through the air supply duct 63 may cool the high-temperature heating lamp 71. In addition, damage or deformation of surrounding structures due to a temperature increase may be mitigated or prevented.

The electrode plate 55 has a width (e.g., a predetermined width) and is a drying target transferred in a roll-to-roll form. The electrode plate 55 may be transferred while supported on a plurality of guide rolls 58. One or both sides of the electrode plate 55 moving along the guide rolls 58 may be coated with an electrode material. In this description, an example in which both sides of the electrode plate 55 are coated with the electrode material will be described.

Multiple rows of electrode material coating layers 55b are stacked (or formed) on both sides of the substrate 55a of the electrode plate 55 (see, e.g., FIG. 3). FIG. 3 shows an embodiment in which three rows of electrode material coating layers 55b are stacked on the substrate 55a. In this description, a row of the electrode material coating layer is referred to as a lane.

The electrode material coating layers 55b are formed of an active material in the form of slurry by using a slot die and disposed in parallel with an uncoated portion 55c having a width (e.g., a predetermined width) interposed therebetween. The uncoated portion 55c is a portion that is not coated with the electrode material.

The air supply duct 63 may guide hot air supplied from the outside to the electrode plate 55. The hot air is discharged from the air supply duct 63 and strikes (e.g., contacts) both sides of the electrode plate 55, thereby drying the electrode material coating layer 55b.

The heating lamp unit 70 for drying an electrode plate may include a plurality of heating lamps 71, a plurality of support structures 73, and a plurality of lamp drivers 72.

The heating lamp 71 corresponds to the electrode material coating layer 55b of each lane within the drying chamber 61 and may selectively heat the electrode material coating layer 55b excluding the uncoated portion 55c. Heat generated from the heating lamp 71 may reach (e.g., may be incident on) an inner region of the electrode material coating layer 55b, and to this end, the heating lamp 71 may output light in a light radiation area that matches or substantially matches a width of the electrode material coating layer 55b.

The heating lamp 71 may be a near-infrared (NIR) lamp. The NIR lamp has excellent responsiveness to rapidly reach a set temperature, and a temperature of the NIR lamp is easily controlled. The heating lamps 71 are disposed to correspond to upper and lower portions of the electrode plate 55 and emit heat (e.g., thermal energy) toward the electrode material coating layer 55b.

The lamp driver 72 may drive the heating lamp 71. The lamp driver 72 may include electrical components or terminal boxes that apply externally supplied power to the heating lamp 71. The lamp driver 72 may be connected to the controller 62 and may be controlled by the controller 62.

The support structure 73 may support the heating lamp 71 and lamp driver 72 while being mounted inside the drying chamber 61. The configuration of the support structure 73 may be implemented in various ways through other embodiments. For example, the support structure 73 may be disassembled from the drying chamber 61. For example, the support structure 73 may be detached from the drying chamber 61, or the detached support structure 73 may be reinstalled into the drying chamber 61. Because the support structure 73 may be detached and reinstalled, maintenance of the heating lamp 71 and the lamp driver 72 may be easily facilitated.

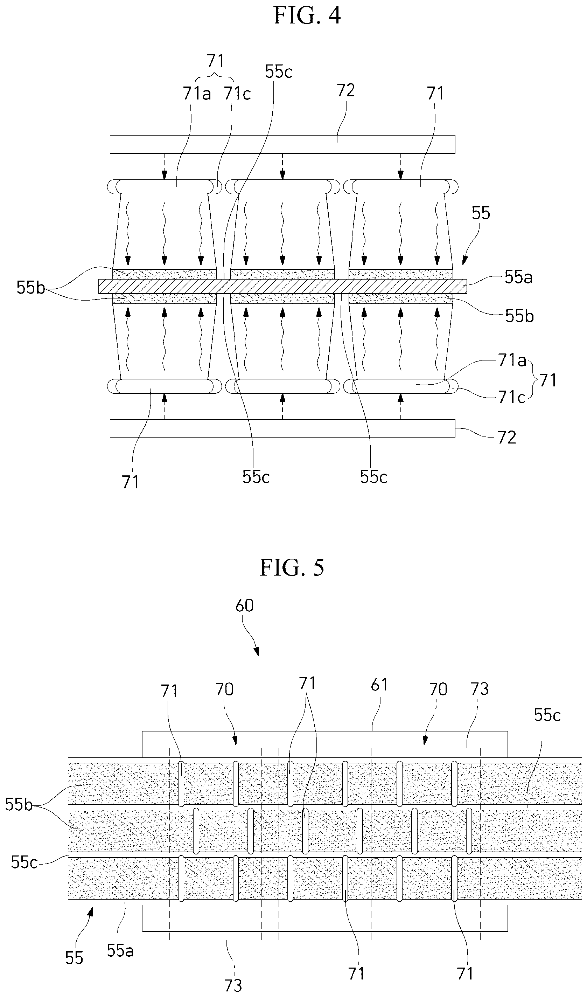

FIG. 3 is a plan view illustrating an arrangement structure of the heating lamps 71 in the heating lamp unit 70 for drying an electrode plate in the secondary battery manufacturing apparatus according to an embodiment of the present disclosure, and FIG. 4 is a conceptual diagram illustrating a state in which each electrode material is heated by using the heating lamps shown in FIG. 3.

As shown in the drawings, the plurality of heating lamps 71 may be disposed to correspond to the upper and lower portions of the electrode material coating layers 55b. Intervals of (e.g., spacing of) the heating lamps 71 with respect to the electrode plate 55 may be the same.

The heating lamp 71 may include a central heat radiating part 71a and connectors 71c. The central heat radiating part 71a may be a body for emitting heat, that is, a body of the heating lamp 71. In addition, the connector 71c may be a component that is electrically connected to the lamp driver 72. Power supplied through the lamp driver 72 may be transmitted to the heating lamp 71 through the connector 71c.

For example, each heating lamp 71 does not heat two or three lanes of the electrode material coating layers 55b at the same time but heats only one electrode material coating layer 55b assigned to each heating lamp 71. Because the electrode material coating layers 55b constitute three lanes in a width direction of the electrode plate 55, three heating lamps 71 are disposed in the width direction of the electrode plate 55. The heat emitted from each heating lamp 71 may only reach an inner region of the electrode material coating layer 55b and may not reach the uncoated portion 55c.

Because the heating lamp 71 applies heat only to the electrode material coating layer 55b and does not heat the uncoated portion 55c, a phenomenon, such as detachment of the electrode material coating layer 55b or occurrence of wrinkles in the uncoated portion 55c, is avoided.

In addition, the plurality of heating lamps 71 may be disposed in (or arranged in) a transfer direction of the electrode plate 55, that is, in a longitudinal direction of the electrode material coating layer 55b, and may be disposed in a row in the width direction of the electrode plate 55. In another embodiment, the heating lamps 71 may be grouped in groups of several heating lamps and mounted on the support structure 73. In the embodiment shown in FIG. 3, six heating lamps 71 are mounted on one support structure 73.

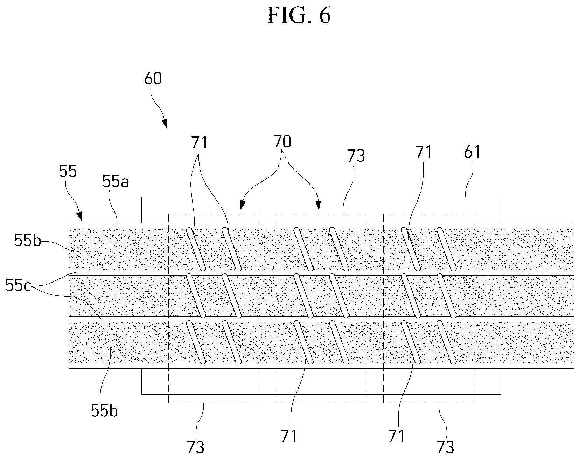

FIGS. 5 and 6 are plan views illustrating different arrangement structures of the heating lamps 71 in the secondary battery manufacturing apparatus according to embodiments of the present disclosure.

Referring to FIG. 5, the heating lamps 71 may not be disposed in a row in the width direction of the electrode plate 55 but may be disposed to be offset from each other. For example, when the width of the uncoated portion 55c is relatively narrow and, thus, interference occurs between adjacent ones of the heating lamps 71, the heating lamps 71 may be disposed to be offset as shown in FIG. 5. In such an embodiment, the heating lamps 71 corresponding to each electrode material coating layer 55b may be disposed at equal intervals in the longitudinal direction of the electrode plate 55.

In another embodiment, as shown in FIG. 6, the heating lamps 71 may be disposed at an angle (e.g., a predetermined angle) in the longitudinal direction of the electrode material coating layer 55b. In such an embodiment, the angle may be about 45 degrees or less. All the heating lamps 71 shown in FIGS. 3, 5, and 6 may have the same function, with only the arrangement configuration being different.

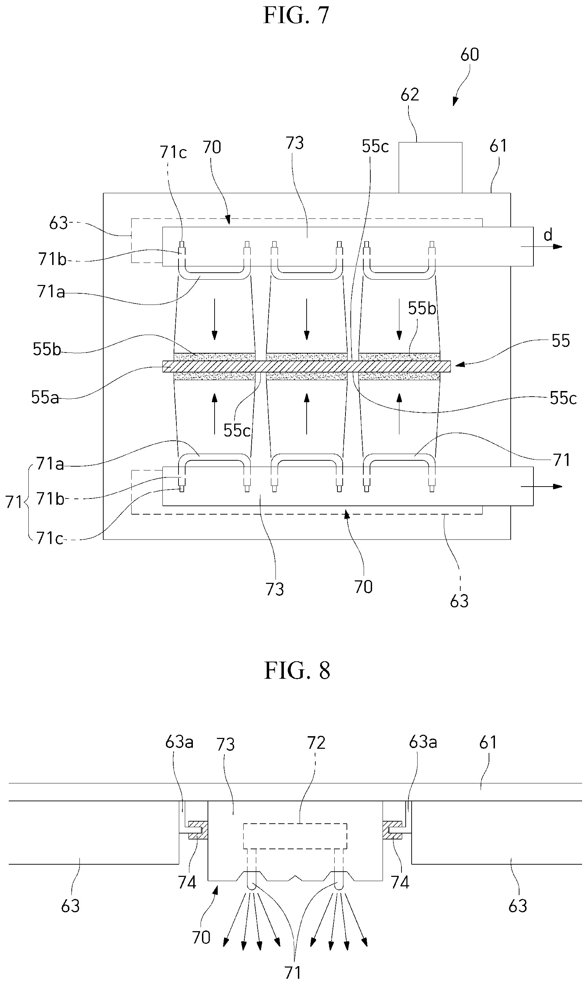

FIGS. 7 and 8 are diagrams illustrating a configuration and an operating method of the heating lamp unit 70 for drying an electrode plate according to an embodiment of the present disclosure. FIG. 8 is a side view illustrating the heating lamp unit 70 for drying an electrode plate shown in FIG. 7.

As shown in FIGS. 7 and 8, both end portions of the heating lamp 71 in the longitudinal direction may be bent to have, for example, a ⊏ -shape.

The bent heating lamp 71 may include the central heat radiating part 71a, bent end portions 71b, and the connectors 71c.

The central heat radiating part 71a is a straight extending portion and may correspond to the width of the electrode material coating layer 55b. A length of the central heat radiating part 71a may be slightly less than or equal to the width of the electrode material coating layer 55b. The central heat radiating part 71a may emit heat to the electrode material coating layer 55b.

The bent end portions 71b are portions bent at both end portions of the central heat radiating part 71a. The bent end portion 71b may form a right angle with respect to the central heat radiating part 71a. Heat is also generated at the bent end portion 71b. However, as shown in FIG. 7, when the bent end portion 71b is disposed vertically, the heat generated at the bent end portion 71b is not transmitted to the electrode material coating layer 55b.

The connector 71c may be a part that electrically connects the heating lamp 71 to the lamp driver 72. Power supplied from the outside may be transmitted to the connector 71c via the lamp driver 72.

The heating lamp 71 with the above configuration may be disposed vertically as shown in, for example, FIGS. 7 and 8. The heating lamp 71 being disposed vertically means that the bent end portion 71b is vertical. Because the bent end portion 71b is vertical, the heat transmitted from the heating lamp 71 to the electrode material coating layer 55b is the heat provided from the central heat radiating part 71a. As described above, the heat output from the bent end portion 71b is not transmitted to the electrode material coating layer 55b.

In addition, as shown in FIG. 8, side brackets 74 may be provided on both sides of the support structure 73. The side bracket 74 is a linear member with a cross-sectional shape (e.g., a predetermined cross-sectional shape) in a longitudinal direction. The side bracket 74 may be slidably supported on a guide rail 63a of the air supply duct 63. The guide rail 63a may support the side bracket 74. Because the guide rail 63a supports the side bracket 74, the heating lamp unit 70 for drying an electrode plate may be maintained in a horizontal position.

In addition, because the side bracket 74 is slidable while supported on the guide rail 63a, the heating lamp unit 70 for drying an electrode plate may be detached from the drying chamber 61 in a direction of an arrow d. For example, when performing maintenance on the heating lamp unit 70 for drying an electrode plate, the heating lamp unit 70 for drying an electrode plate is pulled out of the drying chamber 61. In addition, the detached heating lamp unit 70 for drying an electrode plate may be moved in an opposite direction and placed back in the drying chamber 61.

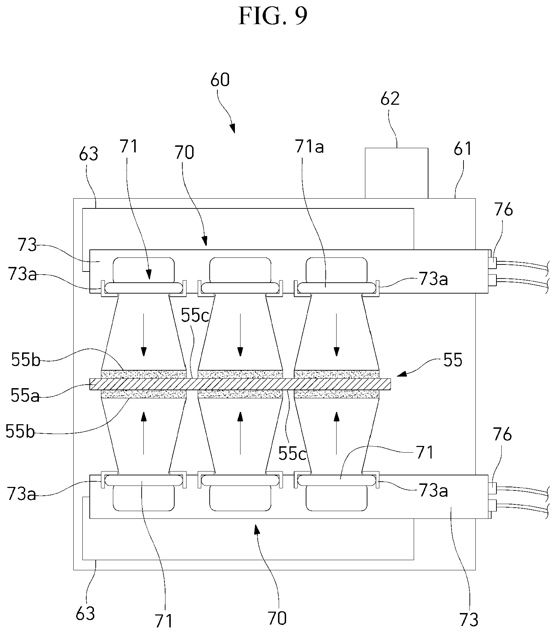

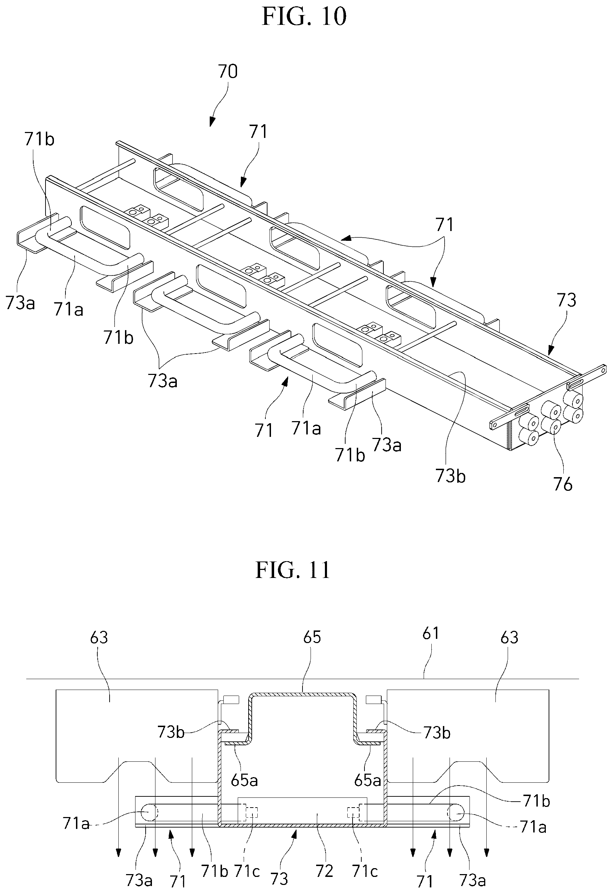

FIGS. 9 to 11 are diagrams illustrating the heating lamp unit for drying an electrode plate according to various other embodiments of the present disclosure. FIG. 10 is a perspective view illustrating the heating lamp unit 70 for drying an electrode plate shown in FIG. 9, and FIG. 11 is a diagram illustrating a mounting direction of the heating lamp 71 in the heating lamp unit 70 for drying an electrode plate.

Referring to FIGS. 9 to 11, the heating lamp 71 bent in a ⊏ shape may be disposed horizontally. The heating lamp 71 being disposed horizontally means that the bent end portion 71b is horizontal. The heating lamps 71 may be disposed in groups of three on opposite sides with the support structure 73 interposed therebetween. The number of applied heating lamps 71 may vary according to the number of electrode material coating layers 55b.

A plurality of blocking covers 73a may be provided on both sides of the support structure 73. The blocking cover 73a may cover the bent end portion 71b to block the heat emitted from the bent end portion 71b from being transmitted to the electrode plate 55. When the blocking cover 73a is omitted, the heat emitted from the bent end portion 71b may reach the uncoated portion 55c, damaging the electrode plate 55. Only the heat output from the central heat radiating part 71a of the heat output from the heating lamp 71 is transmitted to the electrode material coating layer 55b.

In addition, a terminal 76 may be provided at an end portion of the support structure 73. The terminal 76 may be configured to receive externally applied power. In addition, an inwardly bent catching portion 73b may be formed in an upper portion of the support structure 73.

The catching portion 73b is a portion that catches (e.g., supports) a support end portion 65a at a lower end of a horizontal guide 65. The catching portion 73b is slidable while supported on the support end portion 65a.

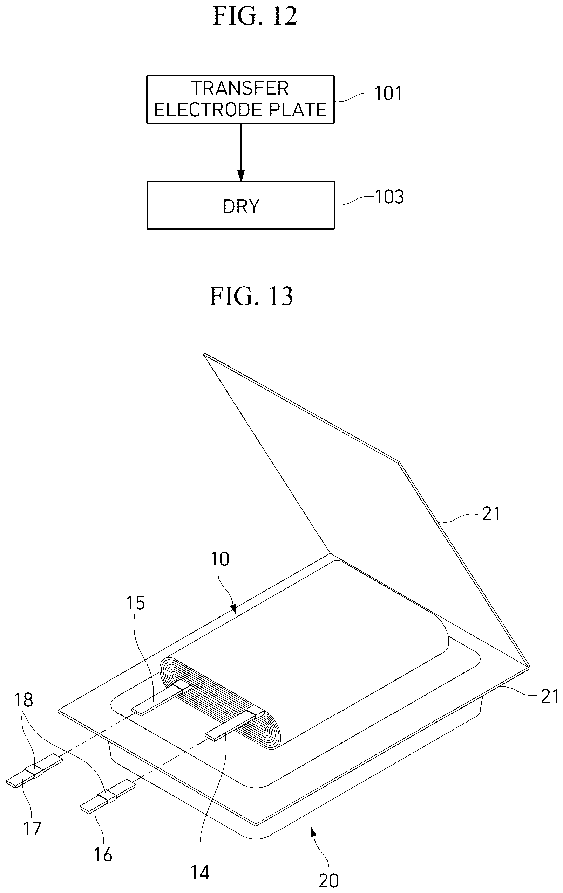

FIG. 12 is a flowchart describing a secondary battery manufacturing method according to an embodiment of the present disclosure. A secondary battery manufacturing method according to an embodiment of the present embodiment is a method of drying the electrode material coating layer 55b by using the above-described secondary battery manufacturing apparatus.

Referring to FIG. 12, the secondary battery manufacturing method may include an electrode plate transfer operation 101 and a drying operation 103.

The electrode plate transfer operation 101 may be a process of transferring the electrode plate 55 and passing the electrode plate 55 through the drying chamber 61. As described above, a plurality of electrode material coating layers 55b are formed in parallel on the electrode plate 55 with the uncoated portion 55c interposed therebetween.

In addition, a plurality of heating lamp units 70 for drying an electrode plate may be disposed inside the drying chamber 61 to dry the electrode material coating layer 55b. The heating lamp unit 70 for drying an electrode plate is operated by the controller 62 and may generate heat for drying the electrode material coating layer 55b.

The drying operation 103 may be a process of drying the electrode material coating layer by using the heating lamp inside the drying chamber 61 and performing the drying by applying heat only to the electrode material coating layer excluding (e.g., not applying heat to) the uncoated portion. For example, the drying operation 103 may be a process in which the heating lamp 71 radiates light in a light radiation area that matches the width of the electrode material coating layer 55b.

As described above, in the secondary battery manufacturing apparatus 60 according to embodiments of the present disclosure, the structure and arrangement of the heating lamp 71 is optimized to limit a heat arrival range to only the electrode material coating layer 55b, thereby enabling the electrode plate to be effectively dried. Thus, because heat is not transmitted to the uncoated portion 55c, there is no concern about wrinkles or detachment, and the uniformity of the electrode material coating layer can be improved.

FIG. 13 is a schematic diagram illustrating a pouch-type secondary battery to which an electrode assembly manufactured with an electrode plate dried by the manufacturing apparatus according to an embodiment of the present disclosure is applied.

The pouch-type secondary battery includes an electrode assembly 10 and a pouch 20 that accommodates the electrode assembly 10.

The first electrode tab 14 and the second electrode tab 15 of the electrode assembly 10 shown in FIG. 13 may be electrically connected to respective external first and second terminal leads 16 and 17 by welding. Each of the first terminal lead 16 and the second terminal lead 17 may be attached with a tab film 18 for insulation from the pouch 20.

The pouch 20 may be sealed by having sealing parts 21 at the edges thereof come into contact with each other while accommodating the electrode assembly 10 therein, in which case the sealing may be achieved with the tab film 18 interposed between the sealing parts 21. The sealing parts 21 of the pouch 20 may each be made of a thermal fusion material that generally exhibits weak adhesion to metal. Thus, the thin tab film 18 may be fused to the pouch 20 by interposing it between the sealing parts 21.

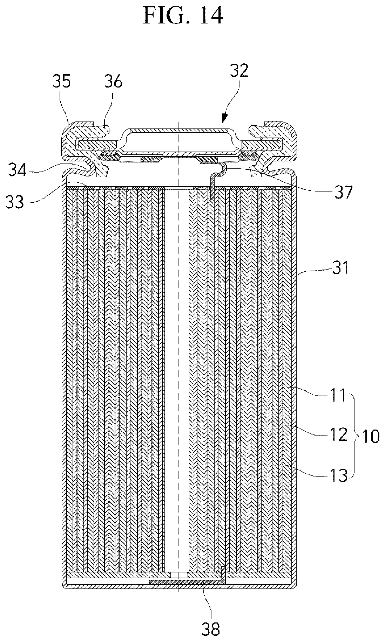

FIG. 14 is a cross-sectional view illustrating a cylindrical secondary battery to which an electrode assembly manufactured with an electrode plate dried by the manufacturing apparatus according to an embodiment of the present disclosure is applied.

The cylindrical battery includes an electrode assembly 10, a case 31 accommodating the electrode assembly 10 and an electrolyte therein, a cap assembly 32 coupled to an opening of the case 31 to seal the case 31, and an insulating plate 33 positioned between the electrode assembly 10 and the cap assembly 32 inside the case.

The case 31 accommodates the electrode assembly 10 and, together with the cap assembly 32, forms the external appearance of the secondary battery. The case 31 may have a substantially cylindrical body portion and a bottom portion connected to one side (e.g., to one end) of the body portion. A beading part 34 (e.g., a bead) deformed inwardly may be formed in the body portion , and a crimping part 35 (e.g., a crimp) bent inwardly may be formed at an open end of the body portion .

The beading part 34 can reduce or prevent movement of the electrode assembly 10 inside the case 31 and can facilitate seating of the gasket 36 and the cap assembly 32. The crimping part 35 may firmly fix the cap assembly 32 by pressing the edge of the cap assembly 32 against the gasket 36. The case 31 may be formed of steel plated with nickel, for example.

The cap assembly 32 may be fixed to the inside of the crimping part 35 by the gasket 36 to seal the case 31. The first lead tab 37 drawn out from the electrode assembly 10 may be connected to the cap assembly 32, and the second lead tab 38 drawn out from the electrode assembly 10 may be electrically connected to the bottom portion of the case 31.

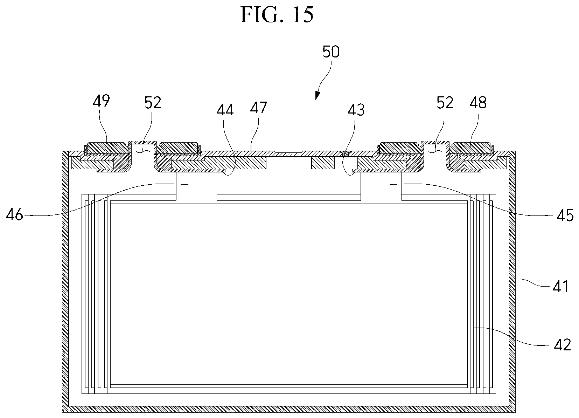

FIG. 15 is a cross-sectional view illustrating a prismatic secondary battery 50 to which an electrode assembly manufactured with an electrode plate dried by the manufacturing apparatus according to an embodiment of the present disclosure is applied.

An electrode assembly 42 may be formed by winding or stacking a first electrode plate, a separator, and a second electrode plate as shown in FIG. 1. When the electrode assembly 42 is a wound type, a winding axis may be parallel to the longitudinal direction of the case 41. In other embodiments, the electrode assembly 42 is a stack type rather than a winding type, but the shape of the electrode assembly 42 is not limited in the present disclosure. In addition, the electrode assembly 42 may be a Z-stack electrode assembly in which a positive electrode plate and a negative electrode plate are inserted into both sides of a separator, which is then bent into a Z-stack. In addition, one or more electrode assemblies 42 may be stacked such that long sides of the electrode assemblies are adjacent to each other and accommodated in the case 41, and the number of electrode assemblies in the case 41 is not limited in the present disclosure. The first electrode plate of the electrode assembly 42 may act as a negative electrode, and the second electrode plate may act as a positive electrode. Of course, the reverse is also possible.

The first electrode tab 45 of the first electrode plate and the second electrode tab 46 of the second electrode plate are respectively positioned on the upper portion of the electrode assembly 42. In some embodiments, the electrode assembly 42 may be accommodated in a case 41 together with an electrolyte.

The first electrode tab 45 and the second electrode tab 46 may be respectively connected to the first current collector 43 and the second current collector 44 by welding. The first current collector 43 and the second current collector 44 are connected to the first terminal 48 and the second terminal 49 through a connection member 52, respectively. In some embodiments, the connection member 52 may each have an outer peripheral surface that is threaded and may be fastened to the first terminal 48 and the second terminal 49 by screwing. However, the present disclosure is not limited thereto. For example, the connection member 52 may also be coupled to the first terminal 48 and the second terminal 49 by riveting or welding.

According to embodiments of the present disclosure, a secondary battery manufacturing apparatus and method and a heating lamp unit for drying an electrode plate of the manufacturing apparatus is provided that avoids heating of an uncoated portion that does not require heating and supplying heat only to a mixture coating area through heating and control for each coating lane so that drying quality is good and productivity of the electrode plate is high.

Although the present disclosure has been described above with respect to embodiments thereof, the present disclosure is not limited thereto. Various modifications and variations can be made thereto by those skilled in the art within the scope of the present disclosure as defined by the appended claims.

## Claims

1. A secondary battery manufacturing apparatus (60) comprising:
a drying chamber (61) configured to receive an electrode plate (55) on which a plurality of electrode material coating layers (55b) are formed in parallel with an uncoated portion (55c) interposed therebetween passing therethrough; and
a heating lamp unit (70) for drying an electrode plate (55), the heating lamp unit (70) comprising:
heating lamps (71) respectively corresponding to the electrode material coating layer (55b) in each lane in the drying chamber (61) and configured to heat the electrode material coating layers (55b) excluding the uncoated portion (55c); and
a lamp driver (72) configured to drive each of the heating lamps (71).

2. The secondary battery manufacturing apparatus (60) as claimed in claim 1, wherein the heating lamp (71) is a linear lamp and is arranged horizontally and perpendicular to a longitudinal direction of the electrode material coating layer (55b).

3. The secondary battery manufacturing apparatus (60) as claimed in claim 1, wherein the heating lamp (71) is a linear lamp and is arranged horizontally and at an angle with respect to a longitudinal direction of the electrode material coating layer (55b).

4. The secondary battery manufacturing apparatus (60) as claimed in any of claims 1 to 3, wherein the heating lamp unit (70) for drying an electrode plate (55) is arranged above and below a transfer path of the electrode plate (55).

5. The secondary battery manufacturing apparatus (60) as claimed in any of claims 1 to 4, wherein the heating lamp unit (70) for drying an electrode plate (55) further comprises a support structure (73) configured to support the heating lamp (71) while being mounted in the drying chamber (61).

6. The secondary battery manufacturing apparatus (60) as claimed in any of claims 1 to 5, wherein the heating lamp (71) is a lamp in which both end portions (71b) are bent away from one of the lanes in the drying chamber (61).

7. The secondary battery manufacturing apparatus (60) as claimed in any of claims 1 to 5, wherein the heating lamp (71) has a central heat radiating part (71a) extending in a straight line, bent end portions (71b) bent at both end portions of the central heat radiating part (71a), and a connector (71c) at each bent end portion (71b) and connected to the lamp driver (72).

8. The secondary battery manufacturing apparatus (60) as claimed in any of claims 1 to 7, wherein the heating lamp (71) is configured to radiate light in or towards a light radiation area that matches a width of the electrode material coating layer (55b) or of the lane.

9. A secondary battery manufacturing method comprising:
transferring (101) an electrode plate (55) on which a plurality of electrode material coating layers (55b) are formed in parallel with an uncoated portion (55c) interposed therebetween, and passing the electrode plate (55) through a drying chamber (61); and
drying (103) the electrode material coating layer (55b) by using a heating lamp (71) inside the drying chamber (61) and applying heat to only the electrode material coating layer (55b) excluding the uncoated portion (55c).

10. The secondary battery manufacturing method as claimed in claim 9, wherein the heating lamp (71) corresponds to the electrode material coating layer (55b) of each lane, and
wherein, in the drying (103) of the electrode material coating layer (55b), the heating lamp (71) radiates light in a light radiation area that matches a width of the electrode material coating layer (55b).

11. The secondary battery manufacturing method as claimed in claim 8 or 9, wherein the drying chamber (61) is the drying chamber (61) of the secondary battery manufacturing apparatus (60) of any of claims 1 to 8.
